# EUROPEAN PATENT APPLICATION

(11) **EP 2 386 411 A1**
(43) Date of publication of application: **16.11.2011**
(21) Application number: 10161800.7
(22) Date of filing: 03.05.2010
(51) Int. Cl.: B32B 27/34, B65D 75/30

(54) **Multilayer barrier film for VSP packaging, method of packaging and packages obtained therewith**

(71) Applicant: Cryovac, Inc., Duncan, South Carolina 29334 (US)
(72) Inventor: Fanfani, Andrea, 20151 Milan (IT)
(74) Representative: Fraire, Cristina

(57) **Abstract**

The present invention relates to packaging films, more specifically to packaging films useful in vacuum skin packaging applications characterized by a very good formability, high implosion and abuse resistance, excellent machinability, good optical and barrier properties, to a method of packaging by using said films and to packages obtained therewith. Said films comprise a) an outer sealing layer, b) an outer abuse layer, c) at least one inner bulk layer and d) a multilayer core comprising e) a barrier layer and f) at least one crystalline polyamide layer adhered to said barrier layer e).

## Description

### Technical Field

The present invention relates to packaging films, more specifically to packaging films useful in vacuum skin packaging applications characterized by a very good formability, high implosion and abuse resistance, excellent machinability, good optical and barrier properties, to a method of packaging by using said films and to packages obtained therewith.

### Background Art

Vacuum skin packaging (VSP) is a process well known in the art using a thermoplastic packaging material to enclose a food product. The vacuum skin packaging process is in one sense a type of thermoforming process in which an article to be packaged serves as the mould for a forming web. An article may be placed on a rigid or semi-rigid support member, that can be flat or shaped, e.g., tray-shaped, bowl-shaped or cup-shaped (called " bottom" web), and the supported article is then passed to a chamber where a "top" web is first drawn upward against a heated dome and then draped down over the article. The movement of the top web is controlled by vacuum and/or air pressure, and in a vacuum skin packaging arrangement, the interior of the container is vacuumized before final welding of the top web to the bottom web.

The distinguishing feature of a vacuum skin package is that the upper heated film forms a tight skin around the product and is sealed to the part of the support not covered by the product.

The terms "vacuum skin packaging" or "VSP" as used herein indicate that the product is packaged under vacuum and the space containing the product is evacuated from gases at the moment of packaging. The top flexible film is referred to as "skin-forming" or "skin" film.

Vacuum skin packaging is described in many references, including FR1258357, FR1286018, AU3491504, USRE30009, US3574642, US3681092, US3713849, US4055672 and US5346735.

Vacuum skin packaging has become an increasingly attractive way of packaging several kinds of food, in particular fresh red meats. The final package presents a tight fitting, clear package which protects the food article from the external environment.

However, the demands imposed on the packaging material used in vacuum skin packaging are particularly high, especially during the heating phase in the dome and the subsequent draping over the product.

Films suitable for VSP applications, for example, have to stand the heating and stretching conditions within the vacuum chamber of the packaging machine without undergoing excessive softening and perforations.

Vacuum skin packaging of food products provided with highly irregular and sharp surfaces, like bon-in meat, crustaceans or shellfish is particularly demanding. These products are not only provided with extremely sharp and tough edges but they also have very irregular shapes which require the skin film to be highly stretched in some areas which are then more prone to puncturing. Generally, VSP packages of products that have cavities or undercuts, are especially prone to implosions or breakage caused by failure of conventional film, especially in case of thinner structures, during the vacuum skin packaging process.

Other important mechanical features of VSP films are machinability and formability.

Conventional VSP formulations, especially when used in very low thicknesses, present machinability drawbacks which negatively affect productivity. In fact, in a standard VSP process, when a conventional top web is unwind from the roll at high speed, it tends to neck-in under the tension applied, namely it tends to elongate in longitudinal direction and to reduce its width: as a consequence the narrowed film is no more correctly pinched by the trailing chains, thus leading to malfunctioning of the system and, unavoidably, to interruptions in VSP cycle. Additionally conventional soft VSP films may encounter other drawbacks, such as in-line breakings, especially when the equipment is restarted after occasional stops.

Good forming ability is highly desirable in VSP applications to ensure that the heated film adequately conforms to the shape of the packaged product, without leaving pleats on the package surfaces or without forming protruding areas of self adhesion of the film, at the package corners or sides. This unwanted phenomenon, known as bridging or webbing , can be so marked to involve separate forming units in the same packaging operation. Obviously packages showing these defects in the top skin draping are not acceptable for the consumer and therefore they have to be rejected.

Other important features of VSP films include oxygen barrier properties, for the preservation of food product such as meats adversely affected by oxidation, and optical properties, such as glossiness and haze, which contribute to an attractive package appearance.

The VSP films presently on the market, such as those described in EP243510, are multilayer structures generally comprising a sealing layer, a skin layer, two bulk layers and two tie layers used to bond the bulk layers to the central EVOH based barrier layer.

These "soft" structures even if provided with good barrier, optical and forming performances, still need to be improved in term of machinability, abuse, implosion and breakage resistance.

In VSP applications, polyamides have been used very rarely as components of the top skin film and, in these few cases, just for their barrier properties, as the only barrier layer as in EP1746046 (VSP films for cheese) or as a barrier reinforcement, flanked beside a central barrier layer of EVOH as described in US5491009.

In US5491009 particular emphasis is put on the improvement of barrier properties under both low and high humidity conditions by using amorphous polyamides and EVOH. Additionally, the patent states that in applications where good implosion resistance and forming ability are also required it is possible to blend the amorphous nylon layer with low modulus nylons. This statement is not backed by any experimental data or selection of preferred conditions: there is no guidance concerning the amount in the blend and the specific polyamides which are supposed to confer such properties.

We have replicated the structures of this patent and we have found that the suggestion to blend amorphous polyamides with crystalline polyamides in the layers flanking the EVOH barrier layer in order to improve mechanical properties do not provide films with the optimum mix of properties. Finally, this patent neither describes nor suggests the use of crystalline polyamides alone.

JP7323508 relates to multilayer VSP films which according to the abstract are characterized by an excellent pinhole resistance and oxygen barrier properties, said films comprising an outermost nylon layer, a gas barrier layer, an adhesive layer, an ionomer layer and an ethylene/vinyl acetate copolymer layer with vinyl acetate content of 10% by weight or more. However we have observed that this films are not ideal for VSP applications especially in term of machinability because they tend to curl and break, due to the internal tensions, and, especially in case of polyamides with low melting points, to stick to the preheating plates.

In conclusion there is still the need to provide VSP films showing an optimized balance of properties, especially the best mix of mechanics and formability, which even with a lower thickness would allow to perform as well as or, preferably, better than the VSP structures currently on the market.

### Disclosure of Invention

It has now been found that by including in an otherwise conventional top web structure for VSP at least one inner layer of a crystalline polyamide, an unexpectedly highly formable film, which is nevertheless resistant to implosions and which does not break during the vacuum skin packaging process, resulted.

Accordingly it is a first object of the present invention a multilayer VSP barrier film comprising a) an outer sealing layer, b) an outer abuse layer, c) at least one inner bulk layer and d) a multilayer core comprising e) a barrier layer and f) at least one polyamide layer adhered to said barrier layer e), characterized in that said polyamide layer f) does not comprise amorphous polyamides.

A second object of the present invention is a vacuum skin package comprising a support, a product loaded onto said support and a top skin film according to the first object of the present invention, said film being draped over the product and welded to the part of the support not covered by the product.

A third object of the present invention is a VSP packaging process in which the top skin film is the film according to the first object of the present invention.

A fourth object of the present invention is the use of a film according to the first object of the present invention as a top web for VSP applications.

### Mode(s) for Carrying Out the Invention

Definitions

As used herein, the term "core", and the phrase "core layer", as applied to the multilayer film refers to any internal film layer that has a primary function other than serving as an adhesive for adhering two layers to one another.

As used herein the term "tie layer" refers to any internal layer having the primary purpose of adhering two layers to one another.

As used herein, the phrase "outer layer" in connection with the multi-layer film refers to a layer having only one of its principal surfaces directly adhered to another layer of the film. As used herein "sealing layer" or "sealant layer" is the outer layer of the multi-layer film that in the VSP packaging process will be in contact with the food product and will seal to the support, while "abuse layer" will be the outer layer that in the VSP packaging process will be in contact with the heated dome.

As used herein, the phrase "inner layer" in connection with the multi-layer film refers to a layer having both its surfaces adhered to other layers of the film

As used herein the term "directly adhered" as applied to the layers of a multi-layer film, refers to the adhesion of a first element to a second element, without an adhesive, a tie layer or any other layer therebetween. In contrast, as used herein, the word "adhered" when used without the adverb "directly", broadly refers to the adhesion of a first element to a second element either with or without an adhesive, a tie layer or any other layer therebetween.

As used herein the term "bulk layer" or "structural" layer refers to a layer generally used to improve the abuse or puncture resistance of the film or just to provide the desired thickness.

As used herein the term "polyolefin" refers to any polymerized or co-polymerized olefin that can be linear, branched, or cyclic, substituted or unsubstituted, and possibly modified. Resins such as polyethylene, ethylene- alpha -(C4-C8)olefin copolymers, ethylene-propylene copolymers, ethylene-propylene- alpha - (C4-C8)olefin ter-polymers, propylene-butene copolymer, polybutene, poly(4-methyl-pentene-1), ethylene-propylene rubber, butyl rubber, as well as copolymers of ethylene (or a higher olefin) with a comonomer which is not an olefin and in which the ethylene (or higher olefin) monomer predominates such as ethylene-vinyl acetate copolymers, ethylene-acrylic acid copolymers, ethylene-alkyl acrylate copolymers, ethylene-methacrylic acid copolymers, ethylene-alkyl methacrylate copolymers, ethylene-alkyl acrylate-maleic anhydride copolymers, ionomers, as well the blends thereof in any proportions are all included. Also included are the modified polyolefins, where the term "modified" is intended to refer to the presence of polar groups in the polymer backbone. The above polyolefin resins can be "heterogeneous" or "homogeneous", wherein these terms refer to the catalysis conditions employed and as a consequence thereof to the particular distribution of the molecular weight, branched chains size and distribution along the polymer backbone, as known in the art.

As used herein the term "ethylene- alpha -(C4-C8)olefin copolymers" is intended to refer to both heterogeneous and homogeneous (e.g., "single site", or "metallocene") materials with densities of from about 0.87 to about 0.95 g/cm³.

As used herein the term "ionomer" designates metal salts of acidic copolymers, such as metal salts of ethylene/acrylic acid copolymers or metal salts of ethylene/methacrylic acid copolymers. These are available, for instance, from DuPont under the trade name Surlyn TM .

As used herein the term "barrier layer" refers to a gas barrier layer or, preferably, to an oxygen-barrier layer, and it is used to identify layers or structures characterized by an Oxygen Transmission Rate (evaluated at 23 °C and 0 % R.H. according to ASTM D-3985) of less than 500 cm³ m².day.atm. Suitable thermoplastic materials that would provide such gas-barrier properties are PVDC, polyamides, EVOH, polyesters, and blends thereof, preferably EVOH.

As used herein, the term "EVOH" includes saponified or hydrolyzed ethylene-vinyl acetate copolymers, and refers to vinyl alcohol copolymers having an ethylene comonomer content preferably comprised from about 25 to about 48 mole %, more preferably, from about 32 to about 48 mole % ethylene, and even more preferably, from about 38 to about 44 mole % ethylene, and a saponification degree of at least 85 %, preferably at least 90 %.

As used herein the term "polyamide" refers to high molecular weight polymers having amide linkages along the molecular chain, and refers more specifically to synthetic polyamides such as nylons. Such term encompasses both homo-polyamides and co-(or ter-) polyamides. It also specifically includes aliphatic polyamides or co-polyamides, aromatic polyamides or co-polyamides, and partially aromatic polyamides or co-polyamides, modifications thereof and blends thereof. The homo-polyamides are derived from the polymerization of a single type of monomer comprising both the chemical functions which are typical of polyamides, i.e. amino and acid groups, such monomers being typically lactams or aminoacids, or from the polycondensation of two types of polyfunctional monomers, i.e. polyamines with polybasic acids. The co-, ter-, and multi-polyamides are derived from the copolymerization of precursor monomers of at least two (three or more) different polyamides. As an example in the preparation of the co-polyamides, two different lactams may be employed, or two types of polyamines and polyacids, or a lactam on one side and a polyamine and a polyacid on the other side.

Detailed description of the invention

A first object of the present invention is a multilayer VSP barrier film comprising a) an outer sealing layer, b) an outer abuse layer, c) at least one inner bulk layer and d) a multilayer core comprising e) a barrier layer and f) at least one polyamide layer adhered to said barrier layer e), characterized in that said polyamide layer f) does not comprise amorphous polyamides.

The outer sealing layer a) of the present films comprises polymers generally used for this purpose in the art of VSP films, typically polyolefins characterized by very low Tg values. Suitable polymers for the heat-sealable layer may be ethylene homo- or co-polymers, like LDPE, ethylene/alpha-olefin copolymers, ethylene/acrylic acid copolymers, ethylene/methacrylic acid copolymers, or ethylene/vinyl acetate copolymers, ionomers. Preferred materials for the heat-sealable layer are LDPE, ethylene/alpha-olefin copolymers, ionomers, ethylene-vinyl acetate copolymers and blends thereof, more preferred ionomers, LDPE, ethylene/alpha-olefin copolymers, most preferred ionomers and LLDPE.

The outer abuse layer b) is the layer of the film that will be in contact with the heated dome of the vacuum chamber in the VSP process. Outer abuse layers in VSP applications typically comprise relatively high melting polyolefins, such ethylene homo-and co-polymers, propylene homo- and co-polymers, ionomers and (co)polyesters, i.e. PET-G, and their admixtures, preferably ionomers, MDPE and HDPE, more preferably HDPE. Generally suitable melting points are higher than 108°C, preferably higher than 120°C.

The at least one inner bulk layer c) or "structural" layer, generally comprises polymers used to improve the abuse or puncture resistance of the film or just to provide the desired thickness. Polymers suitable for these layers are typically ethylene homo- and co-polymers, e.g. low density polyethylene, ethylene-vinyl acetate copolymers, linear low density polyethylenes, linear very low density polyethylenes and ionomers, preferably ionomers and ethylene-vinyl acetate copolymers, more preferably ethylene-vinyl acetate copolymers.

Preferably the films of the present invention comprise two bulk layers c) positioned on the opposite sides with respect to the core layer, said bulk layers comprising preferably the same polymers, more preferably ethylene-vinyl acetate copolymers.

The thickness of the bulk layer(s) c) that is present in the overall structure will depend mainly on the overall thickness desired for the film. Said thickness can be expressed as a percentage of the total thickness of the present film, and it generally ranges between 30 and 80%, preferably between 35 and 70%, more preferably between 40 and 60%.

The core layer d) of the films of the present invention comprises a barrier layer e) and at least one polyamide layer f) adhered to said barrier layer e).

The barrier layer e) according to the present invention comprises PVDC, polyamides, such as PA MXD6/MXDI, EVOH, polyesters, and blends thereof, preferably EVOH, optionally blended with polyamides. The thickness of the gas-barrier layer e) will be set in order to provide the overall multi-layer sheet with the optimal Oxygen Transmission Rate (OTR), lower than 500 cm³/m².day.atm, preferably lower than 100, more preferably lower than 10, even more preferably lower than 7, when measured at 23°C and 0 % of relative humidity (evaluated by following the method described in ASTM D-3985 and using an OX-TRAN instrument by Mocon). Preferably EVOH is used as the only component of the barrier layer.

Typically when EVOH is employed as the only gas-barrier material, this is generally achieved with a thickness between 3 and 14, preferably between 4 and 12, more preferably between 5 and 10 microns. Thicker layers can be used if desired or if a lower OTR is needed.

The core layer d) of the films of the present invention comprises at least one polyamide layer f) adhered to said barrier layer e).

Preferably the core layer d) comprises two layers f) adhered to the opposite surfaces of the barrier layer e). Said at least one or, preferably, two layer(s) f), are preferably directly adhered to the barrier layer e), i.e. without any interposed tie layer.

Said polyamide layer f) mainly comprises crystalline polyamides, generally in amount higher than 60% by weight of said layer composition, preferably higher than 80%, more preferably higher than 90%, even more preferably higher than 95%. Most preferably said polyamide layer f) consists of crystalline polyamides only.

With crystalline polyamides, a single crystalline polyamide or a blend or two or more crystalline polyamides is to be intended, preferably a single crystalline polyamide is intended.

The balance to 100% by weight of the composition of layer f) may be represented by suitable blendable thermoplastic materials or additives, such as for example an ionomer- nylon alloy produced by Du Pont and commercialized under the tradename of Surlyn AM7927, provided that amorphous polyamides are not included.

Crystalline polyamides according to present invention are those polyamides whose melting point is preferably within the range from about 130 to 230°C, more preferably from about 160 to 220°C, even more preferably from about 185 to 210°C.

Crystalline polyamides according to present invention comprise crystalline homo-polyamides and co-(or ter-) polyamides, preferably selected among PA6; PA6.6; PA6.66; PA66.6; PA6.12; PA6.66.12; PA12; PA11; PA6.9; PA6.69; PA6.10; PA10.10; PA66.610; PA MXD6/MXDI, more preferably selected among PA6; PA6.66; PA66.6; PA6.12; PA6.66.12; PA12; PA11; PA6.9; PA MXD6/MXDI, even more preferably among PA6; PA6.66; PA6.12; PA6.66.12; PA12; PA11, most preferably being said crystalline polyamide PA6.66, and blends thereof.

Crystalline polyamides according to the present invention are preferably selected within the polyamides listed above, more preferably within those polyamides listed above having melting points falling within the range preferably from about 140 to 230°C, more preferably from about 160 to 220 °C, even more preferably from about 185 to 210°C.

The thickness of said at least one polyamide layer f) is generally between 2 and 14 microns, preferably between 3 and 10, even more preferably between 4 and 6.

In the preferred embodiment comprising two polyamide layers f) directly adhered to the opposite surfaces of the barrier layer e) the thickness of each layer is generally between 1 and 7 microns, preferably between 1.5 and 6, even more preferably between 2 and 5.

Other layers that may be optionally present in the multi-layer film of the invention are tie or adhesive layers g) that are employed to better adhere one layer to another in the overall structure. In particular the film may include tie layer(s) g) directly adhered (i.e., directly adjacent) to one or both sides of the internal barrier layer e) and/or to one or both sides of polyamide layer(s) f) to better adhere said polyamide layer(s) f) to the adjacent bulk layer(s) c). Additional tie layers may also be used to better adhere said bulk layer(s) c) to the adjacent sealing layer a) and /or outer abuse layer b).

Tie layers may include polymers having grafted polar groups so that the polymer is capable of covalently bonding to polar polymers such as EVOH or polyamides. Useful polymers for tie layers include ethylene-unsaturated acid copolymers, ethylene-unsaturated ester copolymers, anhydride-modified polyolefins, polyurethane, and mixtures thereof. Preferred polymers for tie layers include one or more of thermoplastic polymers such as ethylene-vinyl acetate copolymers with high vinyl acetate content (e.g. 18- 28 wt. % or even more), ethylene-(meth)acrylic acid copolymers, ethylene homo-polymers or co-polymers, modified with anhydride or carboxylic acid functionalities, blends of these resins or blends of any of the above resins with an ethylene homo- or co-polymer, and the like known resins.

Tie layers are of a sufficient thickness to provide the adherence function, as is known in the art. Each tie layer may be of a substantially similar or of a different composition and/or thickness.

The multi-layer film of the present invention may have any total thickness, so long as the film provides the desired properties (e.g. formability, abuse, puncture resistance, machinability, seal strength etc.) for the particular packaging application.

For use as VSP top web the film of the present invention has preferably a total thickness of from about 25 to about 180 microns, preferably from about 30 to about 150, more preferably from about 40 to about 120, even more preferably from about 50 to about 100.

In particular for VSP, thicker films will be used for packaging products of higher profile while thinner film are sufficient and preferred in order to vacuum skin package products with a shallow profile. Generally the films of the present invention are advantageous with respect to current VSP films on the market, providing comparable performances with lower thicknesses.

In particular, thicker films i.e. 100 microns or more, are suitable for demanding applications like packaging of high profile products and/or with irregular and sharp surfaces, such as bone-in meat or frozen products or crabs and the like.

With respect to the present formulations on the market this structures show better puncture resistance at high T which are close to real application conditions.

In the thin gauge version i.e. 50 micron the film of the present invention shows excellent formability and good machinability, with no breaks as opposed to standard formulations.

The film of the present invention may include any number of layers from 5 to 13, preferably from 7 to 11 layers and more preferably 9 layers.

One or more of any of the layers of the multilayer film of the present invention may include appropriate amounts of additives typically included in structures for food packaging for the desired effect, as it is known to those of skill in the packaging films art. For example, a layer may include additives such as slip agents, antiblock agents, antioxidants, fillers, dyes and pigments, cross-linking enhancers, cross-linking inhibitors, radiation stabilizers, oxygen scavengers, antistatic agents, and the like agents.

The films of the present invention are characterized by a resin layers sequence generally selected among: a/e/f/c/b, a/f/e/c/b, a/c/e/f/b, a/c/f/e/b (5 layers), a/f/e/f/c/b, a/c/f/e/f/b, a/c/e/f/c/b, a/c/f/e/c/b (6 layers), a/c/f/e/f/c/b (7 layers), being preferred the sequences a/c/f/e/c/b, a/c/e/f/c/b, a/f/e/f/c/b, a/c/f/e/f/b, a/c/f/e/f/c/b, more preferred a/c/f/e/c/b, a/c/e/f/c/b, a/c/f/e/f/c/b, even more preferred a/c/f/e/f/c/b and all the possible combinations which result by introducing in said structures from 1 to 6 tie layers g), being the sequence a/c/g/f/e/f/g/c/b the most preferred.

Where the multi-layer film representation above includes the same letter more than once, each occurrence of the letter may represent the same composition or a different composition within the class that performs a similar function.

In a first form of realization of the multilayer VSP barrier film first object of the present invention, the core layer d) of the multilayer VSP barrier film comprises a barrier layer e) consisting of EVOH and one polyamide layer f) directly adhered to said barrier layer e).

In another form of realization of the multilayer VSP barrier film first object of the present invention, the core layer d) of the multilayer VSP barrier film comprises a barrier layer e) consisting of EVOH and two polyamide layers f) directly adhered to the opposite surfaces of said barrier layer e).

In a more preferred form of realization of the multilayer VSP barrier film first object of the present invention the core layer d) comprises a barrier layer e) consisting of EVOH and two polyamide layers f) directly adhered to the opposite surfaces of said barrier layer e), said two polyamide layers f) consisting of crystalline polyamides.

In an even more preferred form of realization of the multilayer VSP barrier film first object of the present invention the core layer d) comprises a barrier layer e) consisting of EVOH and two polyamide layers f) directly adhered to the opposite surfaces of said barrier layer e), said two polyamide layers f) consisting of crystalline polyamides whose melting point is from 185 to 210 °C.

In a most preferred form of realization of the multilayer VSP barrier film first object of the present invention the core layer d) comprises a barrier layer e) consisting of EVOH and two polyamide layers f) directly adhered to the opposite surfaces of said barrier layer e), said two polyamide layers f) consisting of PA 6.66.

In another form of realization of the first object of the present invention, the multilayer VSP barrier film comprises two inner bulk layers c) adhered to the opposite sides of the multilayer core d).

In a preferred form of realization of the first object of the present invention, the multilayer VSP barrier film comprises two inner bulk layers c) adhered to the opposite sides of the multilayer core d) by interposition of two tie layers g).

In a more preferred form of realization of the first object of the present invention the multilayer VSP barrier film comprises: a core layer d) comprising a barrier layer e) consisting of EVOH and two polyamide layers f) directly adhered to the opposite surfaces of said barrier layer e), said two polyamide layers f) consisting of crystalline polyamides, and two inner bulk layers c) adhered to the opposite sides of said multilayer core d) by interposition of two tie layers g).

In another form of realization of the first object of the present invention the multilayer VSP barrier film comprises an outer sealing layer a) comprising ionomers or LDPE and an outer abuse layer b) comprising HDPE

In a preferred realization of the present film, said outer sealing layer a) comprises a material selected among LDPE, ethylene/alpha-olefin copolymers, ionomers, ethylene-vinyl acetate copolymers and blends thereof, preferably among ionomers, LDPE, ethylene/alpha-olefin copolymers, more preferably between ionomers and LLDPE and said outer abuse layer b) comprises a material selected among ionomers, MDPE and HDPE, being preferably HDPE.

The multilayer VSP films of the invention can be made by any suitable extrusion or co-extrusion process, either through a flat or a round extrusion dies, preferably by round cast or by hot blown extrusion techniques. Suitable round or flat coextrusion lines for coextruding the films of the invention are well known in the art.

Preferably, for use as the top web of a VSP package the film of the present invention is substantially non oriented.

The multilayer VSP films of the invention, or only one or more of the thermoplastic layers thereof, are preferably crosslinked.

Cross-linking is aimed at improving the strength of the film and/or helping to avoid burn through during heat seal operations and at increasing the heat resistance of the film that has to be brought in contact with the heated dome.

The preferred method of crosslinking is by electron-beam irradiation and is well known in the art. One skilled in the art can readily determine the radiation exposure level suitable for a particular application. Generally, however, radiation dosages of up to about 250 kGy are applied, typically between about 80 and about 240 kGy, with a preferred dosage of between 90 and 230 kGy, and a most preferred one between 110 and 220 kGy.

Irradiation is carried out conveniently at room temperature, although higher and lower temperatures, for example, from 0 to 60°C may be employed.

Chemical cross-linking agents may also be employed to provide the necessary cross-linking of at least one of the component films of the film. Such agents are typically added to a resin directly or by means of a master batch prior to extrusion of the blend.

A second object of the present invention is a vacuum skin package comprising a support, a product loaded onto said support and a top skin film according to the first object of the present invention, said film being draped over the product and welded to the part of the support not covered by the product.

Any support or bottom web generally suitable for VSP applications may also be used within the package of the present invention, including both in-line thermoformed and off-line pre-made supports.

Bottom web is typically a rigid or semi-rigid material or alternative a flexible material. Preferably the bottom web is made of a multilayer material comprising, in addition to a heat-sealable layer to allow welding of the twin skin film to the part of the support not covered by the product, at least one bulk layer for the mechanical properties.

In a number of applications the bottom web is required to have gas barrier properties, in particular oxygen barrier properties. Thus, in addition to a bulk and a heat-sealable layer, bottom web will be provided with a gas barrier layer. The thickness of the gas barrier layer will be typically set in order to provide the support with an oxygen transmission rate lower than 30, lower than 15, preferably lower than 10 cm³/m².d.atm (as measured according to ASTMD-3985 at 23°C and 0% relative humidity).

Generally the heat-sealable layer is selected among the polyolefins, such as ethylene homo- or co-polymers, propylene homo- or co-polymers, ethylene/vinyl acetate copolymers, ionomers. Suitable heat-sealable layers may also include peelable blends to provide the package with an easy-to-open feature.

As used herein, the term "copolymer" refers to a polymer derived from two or more types of monomers, and includes terpolymers.

Ethylene homopolymers include high density polyethylene (HDPE) and low density polyethylene (LDPE).

The term "ethylene copolymer" is used herein to refer to ethylene/alpha-olefin copolymers. Ethylene/alpha-olefin copolymers generally include copolymers of ethylene and one or more comonomers selected from alpha-olefins having from 4 to 12 carbon atoms, such as 1-butene, 1-pentene, 1-hexene, 1-octene, 4-methyl-1-pentene and the like.

Ethylene/alpha-olefin copolymers generally have a density in the range of from about 0.86 to about 0.94 g/cm3. The term linear low density polyethylene (LLDPE) is generally understood to include that group of ethylene/alpha-olefin copolymers which fall into the density range of about 0.915 to about 0.94 g/cm3 and particularly about 0.915 to about 0.925 g/cm3. Sometimes linear polyethylene in the density range from about 0.926 to about 0.94 g/cm3 is referred to as linear medium density polyethylene (LMDPE). Lower density ethylene/alpha-olefin copolymers may be referred to as very low density polyethylene (VLDPE) and ultra-low density polyethylene (ULDPE). Ethylene/alpha-olefin copolymers may be obtained by either heterogeneous or homogeneous polymerization processes.

Ethylene/unsaturated ester copolymers are copolymers of ethylene and one or more unsaturated ester monomers. Useful ethylene/unsaturated ester copolymers are ethylene/vinyl acetate copolymers (EVA), copolymers of ethylene and alkyl esters of acrylic or methacrylic acid, where the esters have from 4 to 12 carbon atoms.

The term "ionomer" (Io) refers to the ionized or partially ionized form of a copolymer of ethylene with a copolymerisable ethylenically unsaturated carboxylic acid monomer selected from acrylic acid and methacrylic acid wherein the neutralizing cation can be any suitable metal ion, e.g. an alkali metal ion, a zinc ion, or other multivalent metal ions.

Useful propylene copolymers include propylene/ethylene copolymers (EPC), which are copolymers of propylene and ethylene having a majority weight percent content of propylene, and propylene/ethylene/butene terpolymers (EPB), which are copolymers of propylene, ethylene and 1-butene.

Suitable thermoplastic materials with low oxygen transmission characteristics to provide packaging materials with gas barrier properties are PVDC, EVOH, polyamides, polyesters or blends thereof.

PVDC is any vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) and the blends thereof in different proportions. Generally a PVDC barrier layer will contain plasticisers and/or stabilizers as known in the art.

EVOH is the saponified product of ethylene-vinyl ester copolymers, generally of ethylene-vinyl acetate copolymers, wherein the ethylene content is typically comprised between 20 and 60 % by mole and the degree of saponification is generally higher than 85 % preferably higher than 95 %.

The term "polyamides" includes aliphatic homo- or co-polyamides commonly referred to as e.g. polyamide 6, polyamide 69, polyamide 610, polyamide 612, polyamide 11, polyamide 12, polyamide 6/12, polyamide 6/66, polyamide 66/610, modifications thereof and blends thereof. Said term also includes crystalline or partially crystalline, aromatic or partially aromatic, polyamides, such as polyamide 61/6T or polyamide MXD6.

The term "polyesters" refers to polymers obtained by the polycondensation reaction of dicarboxylic acids with dihydroxy alcohols. Suitable dicarboxylic acids are, for instance, terephthalic acid, isophthalic acid, 2,6-naphthalene dicarboxylic acid and the like. Suitable dihydroxy alcohols are for instance ethylene glycol, diethylene glycol, 1,4-butanediol, 1,4-cyclohexanedimethanol and the like. Examples of useful polyesters include poly(ethylene 2,6-naphtalate), poly(ethylene terephthalate), and copolyesters obtained by reacting one or more dicarboxylic acids with one or more dihydroxy alcohols, such as PETG which is an amorphous co-polyesters of terephthalic acid with ethylene glycol and 1,4-cyclohexanedimethanol.

Additional layers, such as tie layers, to better adhere the gas barrier layer to the adjacent layers, may be present in the bottom web material for the support and are preferably present depending in particular on the specific resins used for the gas barrier layer.

In case of a multilayer structure, part of it can be foamed and part can be cast. For instance, the bottom web may comprise (from the outermost layer to the innermost food-contact layer) one or more structural layers, typically of a material such as polystyrene, polyester, poly(vinyl chloride), polypropylene or cardboard; a gas barrier layer and a heat-sealable layer.

The overall thickness of the support will typically be up to 8 mm, preferably it will be comprised between 0.1 and 7 mm and more preferably between 0.2 and 6 mm.

A third object of the present invention is a VSP packaging process in which the top skin film is the film according to the first object of the present invention.

The VSP process comprises the steps of placing a product loaded support in a vacuum chamber, positioning the VSP film of the present invention above the product loaded support, allowing the VSP film to drape itself over the product and to weld to the part of the support not covered by the product to obtain a vacuum skin package.

In more detail, the skin-forming film of the present invention is fed to the upper section of a heated vacuum chamber comprising an upper and a lower section, and a vacuum is applied thereto from the outside, thereby drawing the skin-forming film into a concave form against the inwardly sloping walls of the upper section of the chamber and against the ports contained in the horizontal wall portion thereof (the top of the dome). Any conventional vacuum pump can be used to apply the vacuum and preferably the skin-forming film is suitably pre-heated prior to the foregoing operation to render it more formable and thus better able to assume a concave shape in the upper section of the vacuum chamber. The product to be packaged is positioned on a support member, that can be flat or shaped, typically tray-shaped, and placed on a platform that is carried in the vacuum chamber, in the lower section thereof, just below the dome. The support member can be shaped off-line or, alternatively, in-line at an initial station on the vacuum packaging machine. Then the vacuum chamber is closed by moving the upper section down onto the lower one and during this whole sequence of operations vacuum is constantly applied to retain the concave shape of the film. Once the vacuum chamber is closed, vacuum is applied also in the lower section of the vacuum chamber in order to evacuate the space between the support member and the top skin-forming film. Vacuum in the upper section of the vacuum chamber continues to be applied to retain the concave shape of the skin-forming film until the area between the support and the skin-forming film is evacuated, then it is released and atmospheric pressure is admitted. This will collapse the softened top skin-forming film over the product and the support, as the atmosphere pushing the skin-forming film from the top and the vacuum pulling it from the bottom will cooperatively work to have the skin-forming film substantially conform to the shape of the product to be packaged on the support member. Optionally, after the evacuation step has been completed, a suitably selected purging gas or gas mixture could be flushed over the product to generate a very low residual gas pressure into the package. In some instances heat-sealing bars or other sealing means can be present in the vacuum chamber to carry out a perimeter heat-seal of the skin-forming film to the support member.

A fourth object of the present invention is the use of a film according to the first object of the present invention as a top web for VSP applications, being said film characterized by a thickness generally lower than 180 microns, preferably lower than 150, more preferably lower than 120, even more preferably lower than 110, even still more preferably lower than 80.

Experimental part

EXAMPLES

The following examples are presented for the purpose of further illustrating and explaining the present invention and are not to be taken as limiting in any regard. Unless otherwise indicated, all parts and percentages are by weight.

The following abbreviations are used:

Io= ionomer (Surlyn 1702, Du Pont)

EVA1= ethylene vinyl acetate copolymer , Elvax 3165, Du Pont

EVA2= ethylene vinyl acetate copolymer , Elvax 3170, Du Pont

Tie= Orevac 18303, Arkema

PA, PAs = polyamide, polyamides

PA6.12= Grilon CF6S, EMS-Grivory, m.p. 130°C (polycondensation product of caprolactam & laurylactame)

PA6.66= Ultramid C33 01, BASF m.p. 196°C (caprolactam/hexamethylenediamine /adipic acid)

PA6= Ultramid B36LN, BASF, m.p. 220°C (homopolymer of caprolactam)

PAam= Grivory G21 natural, EMS-Brivory

EVOH= ethylene vinyl alcohol , Soarnol AT4403, Nippon Gohsei

HDPE = High-Density Polyethylene: Rigidex HD6070FA, Ineos

PE1= Elite 5032G, LLDPE Dow, d=0.916, mp 122°C

PE2=LD259 Exxon, LDPE d=0.915, mp 105°C

LDPE = Low-Density Polyethylene;

LLDPE = Linear Low-Density Polyethylene;

Example 1

A 9 layer film having the following sequence of layers according to the present invention: Io/EVA/tie/PA6.12/EVOH/PA6.12/tie/EVA/HDPE was manufactured by via round cast coextrusion and afterward x-linked by electron-beam irradiation. It had an average thickness of 65 microns.

Example 2

A 9 layer film having the following sequence of layers according to the present invention: Io/EVA/tie/PA6.66/EVOH/PA6.66/tie/EVA/HDPE was manufactured as described in Example 1. It had an average thickness of 51 microns.

Example 3

A 9 layer film having the following sequence of layers according to the present invention: PE1/EVA/tie/PA6.66/EVOH/PA6.66/tie/EVA/HDPE was manufactured as described in Example 1. It had an average thickness of 100 microns.

Example 4

A 9 layer film having the following sequence of layers according to the present invention: PE1/EVA/tie/PA6/EVOH/PA6/tie/EVA/HDPE was manufactured as described in Example 1. It had an average thickness of 100 microns.

Comparative Example 5

A 9 layer film having the following sequence of layers according to US5491009 Io/EVA/tie/PAam/EVOH/PAam/tie/EVA/HDPE was manufactured as described in Example 1. It had an average thickness of 47 microns.

Comparative Example 6

A 9 layer film having the following sequence of layers according to US5491009 lo/EVA/tie/ PAam + PA6.66 1:1 /EVOH/ PAam + PA6.66 1:1 /tie/EVA/HDPE, was manufactured as described in Example 1. It had an average thickness of 48 microns.

Comparative Example 7

A 6 layer film having the following sequence of layers PE2/EVA2/EVA1/tie/EVOH/tie/EVA1/tie/PA 6.12, was manufactured as described in Example 1, to check the properties conferred by an outer PA layer as described in JP7323508. It had an average thickness of 100 microns.

Comparative Example 8

A 6 layer film having the following sequence of layers PE2/EVA2/EVA1/tie/EVOH/tie/EVA1/tie/PA 6.66 was manufactured as described in Example 1, to check the properties conferred by an outer PA layer as described in JP7323508. It had an average thickness of 100 microns. This structure could not been collected due to the excessive curling caused by the outer polyamide layer.

Test descriptions

The films prepared according to the examples, were submitted to specific tests with the aim to evaluate their mechanical, barrier and packaging properties.

In particular the following technical features were evaluated: Tensile and Elongation at break at 110°C, Puncture Resistance at 110 and 176°C, Oxygen Transmission Rate at 100% RH, Formability in a packaging dome 30 and 50 mm deep and Implosion Resistance. The tests have been performed as described in the following:

Tensile strength and Elongation at break (in Table 1 abbreviated as Tens. Break, Elong. Break)

Tensile strength represents the maximum tensile load per unit area of the original cross-section of the test specimen required to break it, expressed as kg/cm².

Elongation at break represents the increase in length of the specimen, measured at the moment of rupture expressed as percent of the original length.

Measurements were performed with Instron tensile tester equipped with a load cell type CM (1-50 kg), in an environmental chamber set at 110°C, on specimens of about 25 mm x 20 mm, previously stored at 23°C and 50% RH for minimum of 24 hours. At least five specimens shall be tested from each sample direction. Tensile and elongation measurements are made simultaneously. Results are reported as average tensile strength at break, minimum and maximum, average elongation at break, minimum and maximum.

Puncture Resistance (in Table 1 abbreviated as Punct. Res.)

The puncture resistance is the resistance force arising when pushing a punch against a surface of flexible film. The test is performed with a film sample fixed in a specimen holder connected to a compression cell mounted on a dynamometer (Instron tensile tester equipped with a compression cell, 1 - 50 kg normal sensitivity). When the dynamometer is started, a punch is brought against the film sample heated at the selected temperature. The force needed to puncture the sample is graphically recorded as maximum load. Samples are stored for at least 24 hours in a conditioned room at 23°C and 50 % Relative Humidity then 30 specimens are cut, ca. 6.5 cm x 6.5 cm.

Oxygen Transmission Rate (in Table 1 abbreviated as OTR)

The Oxygen gas Transmission Rate is the quantity of oxygen gas passing through a unit area of a plastic material surface per unit time under the conditions of the test. The present measurements have been performed at 23°C, with samples with a humidity content of 100% (samples sandwiched between wet paper filters, put in a wet environment with relative humidity close to 100% for 4 days) on an oxygen permeability tester, equipped with 50 cm² diffusion cells, an oxygen-specific detector, relative humidity and temperature control system. The results are expressed as average OTR (cc/m²-day-atm)

Formability and Machinability test (Packaging test, in Table 1 abbreviated as Pack.)

This method is used to measure the ability of a VSP top web to be formed over a product. It consists of a standard procedure and a scoring to evaluate the incidence of bridging, webbing and pleats formation during VSP packaging. A conventional VSP cycle is performed using R570CD & R270CD machines, with forming depth of 5 mm, dome heights from 30 to 100 mm, dome temperature at about 210°C, machine speed: 6.0 cycles/min. The products packaged were parallelepiped or circular plastics blocks, after packaging they were scored for webbing, bridging and pleats, being 3 the best score (no webbing, bridging and pleats) and 0 the worst score.

Implosion Resistance (in Table 1 abbreviated as Impl. Res.)

This method is used to measure the ability of a VSP film to fill the cavities without breaking. A conventional VSP cycle is performed, as described for the formability test, but the products packaged were plastic blocks having, on the top surface, 10 calibrated holes of different diameters but same depth. Holes diameter ranges from 5 to 14 mm for testing films up to 100 microns and from 10 to 19 mm for testing films up to 150 microns. During the packaging tests with the plastic block, the film tends to undergo a stretching stress which is the higher the larger is the area of a hole. The area of the largest hole before the film becomes broken is entered and is highly representative of the film packaging ability.

The experimental data are collected in the following Table 1:

**Table 1**

| Ex | Thick. | Tens. break 110°C Kg/cm²* | Elong. break 110°C (%)* | Punct. Res. 110° C (g) | Punct. Res. 176° C (g) | OTR at 100% RH | Pack. dome 30 mm | Pack. dome 50 mm | Impl. Res. mm² |
|---|---|---|---|---|---|---|---|---|---|
| 1 | | L 96.4 | L 1400 | | | | 2.1 | | 6.3 |
| | 65 | T 81.2 | T 2400 | | 480 | 130 | | | |
| 2 | | L 178 | L 1800 | | | 58 | 2.7 | 2.7 | 6.3 |
| | 51 | T 137 | T 2000 | | 580 | | | | |
| 3 | 100 | | | 3062 | 834 | | | 3 | 9.3 |
| 4 | 100 | | | 3216 | 1020 | | | 2.8 | 9.2 |
| 5^{∧} | | L 166 | L 570 | | | 24 | Breaks | Breaks | Breaks |
| | 47 | T 117 | T 550 | | 640 | | | | |
| 6^{∧} | | L 109 | L 870 | | | 150 | 2.8 | Breaks | 5.8 |
| | 48 | T 95.2 | T 1100 | | 440 | | | | |
| 7§ | 100 | | | 1683 | | | | 2.8 | |

Keys: Ex= example, Thick.= thickness, L= longitudinal direction, T=transversal direction, *=not normalized, ^{∧}= comparative vs US5491009 (layer f) C. Ex. 5 only amorphous PA; C. Ex. 6 1:1 admixture amorphous PA : PA6.66), §= comparative vs JP7323508 (PA outside)

As can be seen from the values above, the use of crystalline PA alone in layer f) in the films of the present invention resulted in unexpectedly higher elongations at break with respect to the prior art films as described in US5491009, clearly suggesting a very good formability.

In particular, the trend of tensile and elongation for the comparison films of C.Ex. 5 and C.Ex. 6 discouraged the use of crystalline PAs alone for layer f): in fact the introduction of 50% of crystalline PA in layer f) (from C.Ex 5: amorphous PA only, to C.Ex. 6 1:1 admixture amorphous and crystalline PA) provides for a worst tensile with a very little improvement in elongation, not suggesting the unexpected increase in elongation disclosed by the structures of the present invention (see Ex. 1 and 2). Also the values of Puncture Resistance at 176°C discouraged the structures of the present invention that, surprisingly with respect to the teaching of US5491009, showed improved abuse properties (compare C.Ex. 5, only amorphous PA, vs ex 6 1:1 admixture amorphous and crystalline PA, vs Ex. 2). The values of Puncture Resistance at 110°C showed that the use of an outer polyamide layer, as disclose in JP7323508, did not resulted in a good abuse resistance (see values, in particular 1683 g for C.Ex. 7 vs 3062 g and 3216 g for Ex. 3 and 4, representing an increase of about 90-100%).

The values of OTR showed that starting from all amorphous PA structures (C.Ex. 5) and blending with crystalline PA (1:1, C.Ex. 6) a significant drop in oxygen barrier resulted; unexpectedly the structures of the present inventions recovered good barrier properties (see Ex. 2).

The lab findings relating to mechanical properties and formability previously disclosed have substantially been confirmed by the packaging tests: the structures of the present invention disclosed good formability and implosion resistance and no or scarce problems of breaking during the process and at each restarting of the process itself while the structures of the prior art disclosed worst formability and implosion resistance. The structures of C.Ex. 5 and 6 showed repeated breakings both during packaging and implosion tests, being not as suitable as the present films for VSP applications.

In addition, the structure of C.Ex. 7 tended to stick onto the pre-heating plates and, due to the internal tensions, tended to curl with consequent problems of machinability.

## Claims

1. A multilayer VSP barrier film comprising a) an outer sealing layer, b) an outer abuse layer, c) at least one inner bulk layer and d) a multilayer core comprising e) a barrier layer and f) at least one polyamide layer adhered to said barrier layer e), **characterized in that** said polyamide layer f) does not comprise amorphous polyamides.

2. The film according to claim 1 which comprises two bulk layers c) positioned on the opposite sides with respect to the core layer d).

3. The film according to claims 1 or 2 in which said bulk layer(s) c) comprise(s) a material selected among low density polyethylene, ethylene-vinyl acetate copolymers, linear low density polyethylenes, linear very low density polyethylenes and ionomers, preferably ionomers and ethylene-vinyl acetate copolymers, more preferably ethylene-vinyl acetate copolymers.

4. The film according to claims 1 to 3 in which the thickness of said bulk layer(s) c), ranges between 30 and 80%, preferably between 35 and 70%, more preferably between 40 and 60% of the total thickness of the film.

5. The film according to claims 1 to 4 in which said barrier layer e) comprises a material selected among PVDC, polyamides, EVOH, polyesters, and blends thereof, preferably EVOH, optionally blended with polyamides.

6. The film according to claims 1 to 5 in which said core layer d) comprises two polyamide layers f) adhered to the opposite surfaces of the barrier layer e), preferably directed adhered to the opposite surfaces of the barrier layer e)

7. The film according to claims 1 to 6 in which said polyamide layer(s) f) comprise(s) crystalline polyamides, in amount higher than 60% by weight, preferably higher than 80%, more preferably higher than 90%, even more preferably higher than 95%, most preferably consists of crystalline polyamides only.

8. The film according to claims 1 to 7 in which said polyamide layer(s) f) comprise(s) crystalline polyamides whose melting point is preferably within the range from about 130 to 230°C, more preferably from about 160 to 220°C, even more preferably from about 185 to 210°C.

9. The film according to claims 1 to 8 in which said polyamide layer(s) f) comprise(s) crystalline polyamides selected among PA6; PA6.6; PA6.66; PA66.6; PA6.12; PA6.66.12; PA12; PA11; PA6.9; PA6.69; PA6.10; PA10.10; PA66.610; PA MXD6/MXDI, preferably selected among PA6; PA6.66; PA66.6; PA6.12; PA6.66.12; PA12; PA11; PA6.9; PA MXD6/MXDI, more preferably among PA6; PA6.66; PA6.12; PA6.66.12; PA12; PA11, even more preferably said crystalline polyamide being PA6.66, and blends thereof.

10. The film according to claims 1 to 9 in which said outer sealing layer a) comprises a material selected among LDPE, ethylene/alpha-olefin copolymers, ionomers, ethylene-vinyl acetate copolymers and blends thereof, preferably among ionomers, LDPE, ethylene/alpha-olefin copolymers, more preferably between ionomers and LLDPE and said outer abuse layer b) comprises a material selected among ionomers, MDPE and HDPE, being preferably HDPE.

11. The film according to claims 1 to 10 which is cross-linked.

12. The film according to claims 1 to 11 which is **characterized by** a resin layers sequence selected among a/e/f/c/b, a/f/e/c/b, a/c/e/f/b, a/c/f/e/b, a/f/e/f/c/b, a/c/f/e/f/b, a/c/e/f/c/b, a/c/f/e/c/b, a/c/f/e/f/c/b, preferably among a/c/f/e/c/b, a/c/e/f/c/b, a/f/e/f/c/b, a/c/f/e/f/b, a/c/f/e/f/c/b, more preferably among a/c/f/e/c/b, a/c/e/f/c/b, a/c/f/e/f/c/b, even more preferably among a/c/f/e/f/c/b, and all the possible combinations which result by introducing in said structures from 1 to 6 tie layers g), being the sequence a/c/g/f/e/f/g/c/b the most preferred.

13. A vacuum skin package comprising a support, a product loaded onto said support and a top VSP barrier film according to anyone of claims 1 to 12 , said film being draped over the product and welded to the part of the support not covered by the product

14. A vacuum skin packaging process in which the top skin film used is a film according to anyone of claims 1 to 12.

15. Use of a film according to anyone of claims 1 to 12 as a top web for VSP applications.
